# EUROPÄISCHE PATENTSCHRIFT

(11) **EP 4 168 225 B1**
(45) Veröffentlichungstag und Bekanntmachung des Hinweises auf die Patenterteilung: **12.02.2025**
(21) Anmeldenummer: 21736980.0
(22) Anmeldetag: 17.06.2021
(51) Int. Cl.: B29C 33/04, B22F 10/20, B22F 12/82, B23K 9/04, B23K 26/00, B23K 26/14, B23K 26/342, B23P 15/00, B29C 33/38, B29C 45/73, B33Y 10/00, B33Y 80/00, B33Y 50/02, G05B 19/4097, G06F 113/22

(54) **HERSTELLUNGSVERFAHREN EINES BAUTEILS MIT KÜHLKANALSYSTEM**
METHOD FOR PRODUCING A COMPONENT HAVING A COOLING CHANNEL SYSTEM
PROCÉDÉ DE PRODUCTION D'UN COMPOSANT COMPORTANT UN SYSTÈME DE CANAL DE REFROIDISSEMENT

(30) Priorität: 17.06.2020 DE 102020116037
(43) Veröffentlichungstag der Anmeldung: 26.04.2023
(73) Patentinhaber: DMG MORI Ultrasonic Lasertec GmbH, 55758 Stipshausen (DE)
(72) Erfinder: MÜLLER, Andreas, 87480 Weitnau (DE)
(74) Vertreter: MERH-IP Matias Erny Reichl Hoffmann Patentanwälte PartG mbB
(86) Internationale Anmeldenummer: PCT/EP2021/066364
(87) Internationale Veröffentlichungsnummer: WO 2021/255154

(56) Entgegenhaltungen:
- EP-A1- 1 980 380
- DE-A1- 102006 017 808
- DE-A1- 19 740 502
- DE-A1- 19 834 238
- US-A1- 2002 165 634
- GRZESIK WIT: "HYBRID ADDITIVE AND SUBTRACTIVE MANUFACTURING PROCESSES AND SYSTEMS: A REVIEW", JOURNAL OF MACHINE ENGINEERING, vol. 18, no. 4, 30 November 2018 (2018-11-30), pages 5 - 24, XP055845180, ISSN: 1895-7595, Retrieved from the Internet <URL:http://yadda.icm.edu.pl/baztech/element/bwmeta1.element.baztech-a05323d2-13f7-4060-b0a1-5f4ea9652db5/c/1_Grzesik_Hybrid_5-24.pdf> DOI: 10.5604/01.3001.0012.7629
- LI C L ET AL: "Automatic layout design of plastic injection mould cooling system", COMPUTER-AIDED DESIGN, ELSEVIER PUBLISHERS BV., BARKING, GB, vol. 37, no. 7, 1 June 2005 (2005-06-01), pages 645 - 662, XP027649895, ISSN: 0010-4485, [retrieved on 20050601]
- DMG MORI: "Additive Manufacturing - LASERTEC 65 3D", 6 September 2016 (2016-09-06), pages 1 - 2, XP054982287, Retrieved from the Internet <URL:https://www.youtube.com/watch?v=L3CkzQQFZXs> [retrieved on 20210927]

## Beschreibung

### Technisches Gebiet

Die vorliegende Erfindung betrifft ein Verfahren zur Herstellung eines Bauteils mit Kühlkanalsystem.

### Hintergrund der Erfindung

Ein häufig verwendetes Verfahren in der industriellen Fertigung ist beispielsweise Spritzgussverfahren, bei dem ein verflüssigter Werkstoff unter Druck in einen formgebenden Formeinsatz bzw. ein Spritzgusswerkzeug eingespritzt wird, in diesem abkühlt und wieder in einen festen Aggregatzustand übergeht.

Dieses urformende Verfahren kommt häufig im Bereich der Kunststoffbearbeitung zum Einsatz und ermöglicht eine komplexe Formgebung des hierdurch gefertigten Produkts. Der zur Verfestigung des Werkstoff notwendigen Kühlung kommt in einem solchen Verfahren eine besondere Bedeutung zukommt, da sich diese u.a. entscheidend auf die Prozesszeiten auswirkt.

Es ist bekannt, dass eine solche Kühlung des eingespritzten Werkstoff vorteilhafterweise über den Formeinsatz bzw. das Spritzgusswerkzeug erfolgt. Zur Wärmeableitung werden hierbei innerhalb des Formeinsatzes bzw. des Spritzgusswerkzeugs üblicherweise Kühlkanäle vorgesehen, die mit einem entsprechenden Kühlmittel durchströmt werden und so den Formeinsatz bzw. das Spritzgusswerkzeug und damit den darin befindlichen Werkstoff herabkühlen.

Grundsätzlich ist die Herstellung von Werkzeugen, die beim Einsatz erhöhten Temperaturen ausgesetzt sind, wie z.B. Spritzgußwerkzeuge, Umformwerkzeuge, Strangpresswerkzeuge, etc. aufwändig. Insbesondere das Einbringen von in dem Werkzeug verlaufenden Kühlkanälen ist dabei aufgrund der üblicherweise sehr komplexen geometrischen Formen der Werkzeuge häufig nicht leicht zu bewerkstelligen, da die Kühlkanäle in der Regel nur durch Bohren in das fertige Werkzeug eingebracht werden können.

In der dem Stand der Technik zugehörigen Druckschrift DE 10 2004 040 929 A1 wird beispielsweise ein Verfahren beschrieben, bei dem ein Werkzeug mit Kühlmittelkanal als Bauteil durch ein additives materialauftragendes Fertigungsverfahren hergestellt wird, wobei im Zuge des additiven Aufbaus ein Kühlmittelkanal innerhalb des Werkzeugs gebildet wird. Das in Druckschrift DE 10 2004 040 929 A1 gezeigte Verfahren nutzt hierbei die Möglichkeiten einer additiven Fertigung, die besonders bei Bauteilen mit hohem Individualisierungsgrad oder Bauteilen mit einer komplexen Geometrie Anwendung finden und es daher ermöglicht, Aussparungen u.a. innerhalb des Bauteils bereits beim additiven Aufbau vorzusehen.

Allerdings sind die Möglichkeiten zur effizienten Kühlung eines auf diese Weise gefertigten Bauteil begrenzt.

Verfahren zur Herstellung eines Bauteils mit Kühlkanalsystem, umfassend den Aufbau eines ersten Abschnitts des Bauteils durch additives stoffschlüssiges Auftragen eines Aufbaumaterials und Einbringen einer ersten Kavität mit einer Öffnung in den ersten Abschnitt des Bauteils sind bekannt aus "HYBRID ADDITIVE AND SUBTRACTIVE MANUFACTURING PROCESSES AND SYSTEMS: A REVIEW", Journal of Machine Enginieering, Grzesik Wit, Bd. 18, Nr. 4, 30. November 2018, Seiten 5-24, Nichtpatentliteratur-Nummer: XP055845180, ISSN: 1895-7595, DOI: 10.5604/01.3001.0012.7629, Gefunden im Internet: URL:http://yadda.icm.edu.pl/ baztech/element/bwmetal.element.baztech-a05323d2-13f7-4060-b0a1-5f4ea9652db5/ c/1_Grzesik_Hybrid_5-24.pdf , "ADDITIVE MANUFACTURING - LASERTEC 65 3D", DMG Mori, 6. September 2016, Video, Nichtpatentliteratur-Nummer: XP054982287, Gefunden im Internet, URL:https://www.youtube.com/watch?v=L3CkzQQFZXs sowie aus der DE 197 40 502 A1 und der US 2002/165634 A1.

Die Verwendung eines Abdeckteils zu Abdeckung von Kühlkanälen auf das anschließend Material durch Auftragsschweißen aufgetragen wird ist aus der DE 198 34 238 A1 bekannt. Kühlkanalsysteme mit mehreren Ebenen oder Abschnitten bei denen Kühlkanäle eines Bereiches mit Kühlkanälen eines anderen Bereiches durch Verbindungskanäle verbunden werden sind zum Beispiel aus der DE 10 2006 017808 A1 bekannt und aus "AUTOMATIC LAYOUT DESIGN OF PLASTIC INJECTION MOULD COOLING SYSTEM", Li C. L. et al, Computer-Aided Design, Elsevier Publishers BV, BARKING, GB, Bd. 37, Nr. 7, 1. Juni 2005, Seiten 645-662, Nichtpatentliteratur-Nummer: XP027649895, ISSN: 0010-4485 bekannt, wobei letztere auch das Einbringen von Verbindungskanälen durch materialabtragende Bearbeitung zeigt.

### Zusammenfassung der Erfindung

Eine Aufgabe der vorliegenden Erfindung ist es daher, ein Verfahren zur Herstellung eines Bauteils mit einer verbesserten Wärmeableitung bereitzustellen.

Zur Lösung dieser Aufgabe wird ein Verfahren zur Herstellung eines Bauteils mit Kühlkanalsystem nach Anspruch 1 vorgeschlagen.

Ferner wird ein zur Konstruktion eines solchen Bauteils eingerichtetes softwaregestütztes Computersystem nach Anspruch 14 vorgeschlagen.

Die jeweiligen abhängigen Ansprüche beziehen sich dabei auf bevorzugte Ausführungsformen der erfindungsgemäßen Verfahren bzw. des erfindungsgemäßen Datenverarbeitungssystems, die jeweils für sich genommen oder in Kombination bereitgestellt werden können.

Gemäß eines ersten Aspekts der Erfindung umfasst das Verfahren zur Herstellung eines Bauteils mit Kühlkanalsystem einen Aufbau eines ersten Abschnitts des Bauteils durch additives stoffschlüssiges Auftragen eines Aufbaumaterials sowie ein Einbringen einer ersten Kavität mit einer Öffnung in den ersten Abschnitt des Bauteils. Das Verfahren ist dadurch gekennzeichnet, dass es ferner ein Abdecken der Öffnung der ersten Kavität im ersten Abschnitt durch ein Abdeckteil, einen Aufbau eines zweiten Abschnitts des Bauteils durch additives stoffschlüssiges Auftragen des Aufbaumaterials, wobei das Aufbaumaterial auf dem ersten Abschnitt und auf dem Abdeckteil aufgetragen wird; ein Einbringen einer zweiten Kavität in den zweiten Abschnitt des Bauteils und ein Einbringen eines Verbindungskanals in das Bauteil durch zumindest teilabschnittsweise materialabtragend erfolgende Bearbeitung zur Ausbildung des Kühlkanalsystems, wobei der Verbindungskanal die zweite Kavität des zweiten Abschnitts mit der ersten Kavität des ersten Abschnitts des Bauteils verbindet, umfasst.

Optional kann das Abdeckteil nach dem Einlegen durch Aufbringen von z.B. einer additiven Auftragsschweißspur sicher fixiert werden. Dies kann z.B. erforderlich sein, wenn mehrere an einem 5-achsig zu bearbeitenden Werkstück Abdeckteile in unterschiedlicher Richtung zur Schwerkraft eingesetzt werden, um ein Herausfallen zu verhindern. Alternativ kann ein Abdeckblech auch durch Punktschweißen fixiert werden.

Durch das erfindungsgemäße Verfahren können Bauteile mit komplexen geometrischen Formen und einem innerhalb des Bauteils verlaufenden Kühlkanalsystems, das zur Durchleitung eines Kühlmittels eingerichtet ist und ebenfalls eine komplexen geometrischen Form aufweist, in besonders vorteilhafter Weise hergestellt werden.

Die Ausbildung des innerhalb des Bauteils verlaufenden Kühlkanalsystems erfolgt im Zuge des Aufbaus durch additives stoffschlüssiges Auftragen des Aufbaumaterials (= additiver Aufbaus) der einzelnen Abschnitte des Bauteils, sodass die geometrische Anordnung des Kühlkanalsystems, welche sich aus den Positionen der Kavitäten sowie des Verbindungskanals im Bauteil bestimmt, in vorteilhafter Weise an die komplexe Endgeometrie des herzustellendes Bauteils angepasst werden kann, sodass das Kühlkanalsystem zumindest abschnittsweise angepasst an Außenkonturflächen des Bauteils verläuft, diesen also zumindest abschnittsweise folgt. Unter dem abschnittsweisen Folgen ist hier eine Anordnung des Kühlkanalsystems zu verstehen, bei der eine Flussrichtung des durch das Kühlkanalsystem fließenden bzw. durchgeleiteten Kühlmittels im Wesentlichen parallel zu einer Außenkonturfläche des Bauteils verläuft.

Das Einbringen eines derartigen innenliegenden Kühlkanalsystems ist im Falle komplexer Bauteilgeometrien durch ein lediglich im Anschluss an das urformende Verfahren erfolgendes Einbringen in Form von Bohrungen in der Regel nicht möglich.

Das Einbringen der Bohrungen war bis dato bei herkömmlichen Verfahren durch die Bauteilgeometrie sowie die Möglichkeiten des Bohrverfahrens beschränkt, sodass nur Kühlkanalsysteme mit äußerst einfacher geometrischer Anordnung eingebracht werden konnten.

Das erfindungsgemäße Verfahren bedient sich hierbei der Synergie eines Aufbaus durch additives stoffschlüssiges Auftragen des Aufbaumaterials (=additiver Aufbau) sowie einer materialabtragenden Bearbeitung zur Ausbildung des darin verlaufenden Kühlkanalsystems, u.a. durch Einbringen des Verbindungskanals.

Das erfindungsgemäße Verfahren ist somit ein hybrides Herstellungsverfahren mit einer abwechselnden Abfolge additiver Aufbauschritte und materialabtragender Bearbeitungsschritte.

Durch das erfindungsgemäße Verfahren können insbesondere endkonturnahe Kühlkanalsysteme realisiert werden, wodurch die Wärmeableitung durch ein darin strömendes Kühlmittel wesentlich verbessert werden kann.

Zudem können Bereiche des Bauteils, die im Zuge der Anwendung thermisch besonders beansprucht werden, in vorteilhafter Weise durch Einbringen einer Kavität mit im Verhältnis zum Verbindungskanal größer ausgeführtem Querschnitt effizient durch das durch die Kavität strömende Kühlmittel gekühlt werden.

Ein Abdecken der Öffnung der ersten Kavität im ersten Abschnitt durch ein vorteilhafterweise eben und/oder flach ausgeführtes Abdeckteil ermöglicht den additiven Aufbau des zweiten Abschnitts durch das Auftragen des Aufbaumaterials, wobei die erste Kavität vollständig im Inneren des Bauteils eingeschlossen wird und die erste Kavität dabei eine einfache geometrische Form mit einer dem zweiten Abschnitt zugewandten ebenen Grenzfläche bzw. Grenzflächengeometrie aufweist.

Das Verschließen der Öffnung einer, im fertigen Bauteil vollständig innerhalb liegenden Kavität durch ein rein additives Auftragen des Aufbaumaterials (ohne Abdeckteil) ist nur unter Einhaltung bestimmter dazu ausgeführter, i.d.R. nicht-ebener Grenzflächengeometrien möglich. Das Ausbilden einer Grenzflächengeometrie in Form einer ebenen Grenzoberfläche (ohne Abdeckteil) ist verfahrensbedingt nicht möglich, weswegen üblicherweise pyramiden- oder kegelförmige Grenzflächengeometrien durch das additive Auftragen aufgebaut werden; z.B. in Dachform.

Derartige nicht-ebene Grenzflächengeometrien der Kavitäten erweisen sich in vielerlei Hinsicht als nachteilig.

Zum einen stellen solche Grenzflächengeometrien unerwünschte Staupunkte für ein durch das Kühlkanalsystem durchfließendes Kühlmittel und damit auch eine Verschlechterung der hierdurch erfolgenden Wärmeableitung dar.

Zum anderen stellen derartig meist spitz zulaufende Grenzflächengeometrien (pyramiden- oder kegelförmig) potentielle Schwachpunkte im Sinne einer Sollbruchstelle (Kerbfaktor) dar, an denen es im Falle einer mechanischen Belastung des Bauteils zu überhöhten Spannungsspitzen innerhalb des Bauteils kommen kann, in Folge derer das Bauteil an der entsprechenden Stelle versagen kann (Riss, Bruch, plastische Verformung, etc.).

Durch den abschnittsweisen Aufbau des Bauteils auf erfindungsgemäße Weise kann der Verbindungskanal in einer Weise eingebracht werden, die im Anschluss an den vollständigen erfolgten additiven Aufbau des Bauteils nicht möglich wäre.

Der Verbindungskanal wird hierbei in vorteilhafter Weise ausgehend von der zweiten Kavität im zweiten Abschnitt des Bauteils in Richtung der ersten Kavität im ersten Abschnitt eingebracht, um so eine Verbindung zu der nach dem Aufbau des zweiten Abschnitts innerhalb des Bauteils angeordneten ersten Kavität herzustellen, und damit das Kühlkanalsystem auszubilden.

Der Zugang eines hierfür zur materialabtragenden Bearbeitung ausgeführten Werkzeugs erfolgt dabei vorteilhafter Weise über die Öffnung der zweiten Kavität des zweiten Abschnitts. Bevorzugt weist die zweite Kavität eine entsprechende Geometrie auf, die das Einbringen des Verbindungskanals durch das Werkzeug nicht behindert, sodass z.B. ein zur zerspanenden Bearbeitung ausgeführter Bohrkopf durch die Öffnung der zweiten Kavität in das Bauteil eindringen kann, ohne dieses zu beschädigen.

In vorteilhafter Weise können durch das mindestens teilweise auf materialabtragender Bearbeitung basierende Einbringen der Verbindungskanäle im Verhältnis zu den sonstigen durch additiven Aufbau hergestellten Oberflächen eine höhere Oberflächengüte mit glatteren Oberflächenstrukturen der an den Verbindungskanal angrenzenden Oberflächen des Bauteils geschaffen werden.

Durch einen additive Aufbau durch stoffschlüssiges Auftragen des Aufbaumaterials geschaffenen Oberflächen, weisen generell eine Oberflächenstruktur bzw. Oberflächenbeschaffenheit mit größeren Rauheitswerten und geringerer Oberflächengüte auf, als dies bei einer durch materialabtragenden Bearbeitung, insbesondere einer zerspanenden Bearbeitung, geschaffenen Oberfläche der Fall ist.

Die hohe Oberflächengüte des Verbindungskanals mit glatter Oberflächenstruktur bzw. geringeren Rauheitswerten verbessert die Durchleitung eines durch den Verbindungskanal strömenden Kühlmittels, da hier ein geringerer Strömungswiderstand vorliegt. Bei rauen Oberflächen durchströmter Kanäle oder Leitungen kommt es in den Bereichen der Oberflächen zu turbulenten Strömungen und damit einem Anstieg des Strömungswiderstands, der einen Durchfluss entsprechend behindert.

Durch das auf materialabtragender Bearbeitung basierende Einbringen des Verbindungskanals kann somit der Strömungswiderstand eines durchströmenden Kühlmittels im Verhältnis zu einem lediglich durch additiven Aufbau gefertigten Verbindungskanal signifikant reduziert werden, was sich wiederum positiv auf die Wärmeableitung auswirkt, da bei geringerem Strömungswiderstand und sonst gleichen Randbedingungen (Druckdifferenz, Kanalquerschnitt) höhere Durchflussraten bzw. Strömungsgeschwindigkeiten des durchfließenden Kühlmittels erreicht werden.

Grundsätzlich ist jedoch auch das Einbringen des Verbindungskanals abschnittsweise durch ein additives Verfahren möglich, indem entsprechende Bereich beim Materialauftrag ausgelassen werden.

Das erfindungsgemäße Verfahren ist hierbei in keinster Weise auf lediglich eine erste Kavität im ersten Abschnitt und/oder lediglich eine zweite Kavität im zweiten Abschnitt beschränkt. Je nach Geometrie des herzustellenden Bauteils können mehrere Kavitäten in den einzelnen Abschnitten des Bauteils eingebracht werden, die über entsprechend viele Verbindungskanäle untereinander abschnittsübergreifend zur Ausbildung des Kühlkanalsystems verbunden werden können; es können demnach zur Ausbildung des Kühlkanalsystems auch mehrere Verbindungskanäle in eine einzelne Kavität münden.

So ist es beispielsweise möglich, im ersten Abschnitt zwei voneinander separierte Kavitäten einzubringen, die nach Aufbau des zweiten Abschnitts mit einer im zweiten Abschnitt eingebrachten Kavität durch das Einbringen zweier Verbindungskanäle verbunden werden. Hierbei münden die zwei Verbindungskanäle beide in die Kavität des zweiten Abschnitts und verbinden diese mit den beiden Kavitäten im ersten Abschnitt.

Alternativ wäre es beispielsweise auch möglich, eine Kavität in den ersten Abschnitt einzubringen und diese mit zwei im zweiten Abschnitt eingebrachten Kavitäten durch das Einbringen zweier Verbindungskanäle miteinander zu verbinden.

Unter einer Verbesserung der Wärmeableitung des Bauteils ist u.a. eine Erhöhung der Abkühlraten/Abkühlgeschwindigkeiten des Bauteils bei einem mit thermischer Belastung verbundenen Einsatz des Bauteils zu verstehen, z.B. als Werkzeug in einem Fertigungsprozess, sodass kürzere Prozesszeiten bzw. Taktzeiten erreicht werden können. Die Wärmeableitung erfolgt durch das durch das Kühlkanalsystem strömende Kühlmittel, welches die durch das Bauteil geleitete Wärme aufnimmt und aus diesem hinaus- bzw. ableitet.

In einer bevorzugten Ausführungsform des Verfahrens erfolgt das Einbringen der ersten und/oder ggfs. weiteren Kavitäten im Anschluss an den Aufbau der jeweiligen Abschnitte zumindest abschnittsweise durch materialabtragende Bearbeitung.

In einer besonders bevorzugten Ausführungsform des Verfahrens ist die materialabtragende Bearbeitung zur Einbringung der ersten und/oder der zweiten Kavität eine zerspanende Bearbeitung.

Das Einbringen der Kavitäten mittels zerspanender Bearbeitung ist besonders positiv, da hierdurch an die Kavitäten angrenzende Oberflächen des Bauteils eine hohe Oberflächengüte aufweisen, insbesondere in Relation zu Oberflächen, die durch ein rein additives Auftragen des Aufbaumaterials geschaffen werden, wodurch der Strömungswiderstand innerhalb des Kühlkanalsystems reduziert werden kann.

In einer weiteren bevorzugten Ausführungsform des Verfahrens erfolgt das Einbringen der ersten und/oder der zweiten Kavität im Zuge des Aufbaus der jeweiligen Abschnitte durch Auslassungen der entsprechenden Bereiche beim additiven stoffschlüssigen Auftragen des Aufbaumaterials.

Durch das Auslassen beim Auftragen des Aufbaumaterials können in vorteilhafter Weise die Kavitäten bereits im Zuge des Aufbaus der jeweiligen Abschnitte eingebracht werden, was zu einer Reduktion der Fertigungskosten, der Fertigungszeit und zu Einsparungen des Aufbaumaterials führt.

In einer besonders bevorzugten Ausführungsform des Verfahrens werden die an die im Zuge des Aufbaus der Abschnitte eingebrachten Kavitäten angrenzenden Oberflächen der Abschnitte durch zerspanende Bearbeitung nachbearbeitet.

Durch die zerspanende Nachbearbeitung besagter Oberflächen wird deren Oberflächengüte verbessert, insbesondere in Relation zu Oberflächen, die durch ein rein additives Auftragen des Aufbaumaterials geschaffen werden, wodurch der Strömungswiderstand innerhalb des Kühlkanalsystems reduziert werden kann.

Im Gegensatz zum Einbringen einer der Kavitäten durch lediglich materialabtragende Bearbeitung ohne vorheriges Auslassen beim additiven Aufbau können zudem Werkzeugkosten reduziert werden, da lediglich eine Oberfläche bearbeitet wird und nicht die gesamte Kavität selbst durch materialabtragende Bearbeitung eingebracht wird.

In einer besonders bevorzugten Ausführungsform des Verfahrens umfasst dieses weiterhin ein teilweises oder vollständiges Abdecken einer Öffnung der zweiten Kavität des zweiten Abschnitts durch ein Abdeckteil sowie einen Aufbau eines weiteren Abschnitts des Bauteils durch additives stoffschlüssiges Auftragen des Aufbaumaterials, wobei das Aufbaumaterial auf dem zweiten Abschnitt und auf dem Abdeckteil der Öffnung der zweiten Kavität aufgetragen wird.

Hierdurch wird die Öffnung der zweiten Kavität mit Aufbaumaterial verschlossen, sodass das Bauteil ein vollständig in dessen Inneren liegendes Kühlkanalsystems aufweist.

In einer besonders bevorzugten Ausführungsform des Verfahrens umfasst dieses weiterhin die Schritte:
ZS1: Einbringen von mindestens einer weiteren Kavität mit einer Öffnung in einen der zuvor bereits aufgebauten Abschnitte des Bauteils, wobei das Einbringen der weiteren Kavität im Anschluss an den Aufbau des jeweils zuvor bereits aufgebauten Abschnitts durch materialabtragende Bearbeitung oder im Zuge des Aufbaus des zuvor bereits aufgebauten Abschnitts durch Auslassungen beim additiven stoffschlüssigen Auftragen des Aufbaumaterials erfolgt.
ZS2: Einbringen von einem oder mehreren Verbindungskanälen in das Bauteil durch materialabtragende Bearbeitung zur weiteren Ausbildung des Kühlkanalsystems, wobei der oder die Verbindungskanäle die weitere Kavität aus Schritt ZS1 mit der oder den davor eingebrachten Kavitäten in den zuvor aufgebauten Abschnitten des Bauteils verbindet.
ZS3: Mindestens teilweises Abdecken der Öffnung der weiteren Kavität aus Schritt ZS1 durch ein Abdeckteil.
ZS4: Aufbau ein oder mehrerer weiterer Abschnitte des Bauteils durch additives stoffschlüssiges Auftragen des Aufbaumaterials, wobei das Aufbaumaterial auf ein oder mehrere der zuvor aufgebauten Abschnitte und auf dem Abdeckteil des vorangegangen Schritts ZS3 aufgetragen wird.

Optional kann das Abdeckteil nach dem Einlegen in Schritt ZS3 durch Aufbringen von z.B. einer additiven Auftragsschweißspur sicher fixiert werden. Dies kann z.B. erforderlich sein, wenn mehrere an einem 5-achsig zu bearbeitenden Werkstück Abdeckteile in unterschiedlicher Richtung zur Schwerkraft eingesetzt werden, um ein Herausfallen zu verhindern. Alternativ kann ein hierzu verwendetes Abdeckblech auch durch Punktschweißen fixiert werden.

In einer besonders bevorzugten Ausführungsform des Verfahrens können diese Schritte mehrfach wiederholt werden, sodass durch mehrere Wiederholungen der Verfahrensschrittabfolge ZS1 bis ZS4 ein Bauteil mit einer Vielzahl von Abschnitten und einem innerhalb des Bauteils ausgebildeten Kühlkanalsystems, welches aus einer Vielzahl von Kavitäten und einer Vielzahl von Verbindungskanälen zur Verbindung der Vielzahl von Kavitäten gebildet ist, hergestellt werden.

Hierdurch können Bauteile mit komplexen Geometrien, insbesondere Außengeometrien, und einem innerhalb des Bauteils verlaufenden auf die komplexe Geometrie vorteilhaft angepasstem Kühlkanalsystem hergestellt werden.

Die Anzahl von Kavitäten pro Abschnitt des Bauteils ist hierbei nicht auf eins beschränkt, sodass einzelne Abschnitte auch mehrere eingebrachte Kavitäten aufweisen können, die zur vorteilhaften Ausbildung des Kühlkanalsystems beitragen.

In einer besonders bevorzugten Ausführungsform des Verfahrens ist die materialabtragende Bearbeitung zur Einbringung des oder der Verbindungskanäle eine zerspanende Bearbeitung.

Durch die zerspanende Bearbeitung kann eine hohe Oberflächengüte der geschaffenen Oberflächen des Bauteils, welche an die Verbindungskanäle angrenzen erreicht werden, insbesondere in Relation zu Oberflächen, die durch ein rein additives Auftragen des Aufbaumaterials geschaffen werden, wodurch der Strömungswiderstand innerhalb des Kühlkanalsystems reduziert werden kann.

In einer besonders bevorzugten Ausführungsform des Verfahrens erfolgt das additive stoffschlüssige Auftragen des Aufbaumaterials durch Auftragsschweißen mit Laser oder Lichtbogen.

In einer besonders bevorzugten Ausführungsform des Verfahrens die Zufuhr des Aufbaumaterials beim Auftragen durch Auftragsschweißen in Form von Pulver und/oder Draht.

In einer besonders bevorzugten Ausführungsform des Verfahrens werden in einem Bereich um die Öffnung(en) von ein oder mehreren der Kavitäten in den jeweiligen Abschnitten durch materialabtragende Bearbeitung auf Geometrien der zum Abdecken der jeweiligen Öffnungen ausgeführten Abdeckteile angepasste vertiefte Absätze derart ausgebildet ist, dass die jeweiligen Abdeckteile zum Abdecken der jeweiligen Öffnungen formschlüssig in Position gehalten werden.

Hierdurch kann ein Einlegen des oder der Abdeckteile zum Abdecken der Öffnung(en) sowie der sich daran anschließende additive Aufbau auf dem jeweiligen Abdeckteil vereinfacht werden, da das jeweilige Abdeckteil relativ zum Bauteil in Position gehalten wird und sich nicht durch unerwünschte Erschütterungen oder dergleichen verschiebt.

In einer besonders bevorzugten Ausführungsform des Verfahrens sind ein oder mehrere der Abdeckteile Blechronden oder Blechabdeckungen.

In einer besonders bevorzugten Ausführungsform des Verfahrens werden Geometrien der Kavitäten aus einer Menge vorbestimmter Standardgeometrien der Kavitäten ausgewählt.

Hierdurch kann eine weitestgehend standardisierte Herstellung ermöglicht werden, da keine x-beliebigen Geometrien für die Kavitäten ausgewählt werden, sondern eine Auswahl gemäß eines Baukastenprinzips aus einer Menge vorbestimmter Standardgeometrien entnommen werden. Durch die so erzielte Vereinheitlichung können weitere Verfahrensschritte optimiert werden, insbesondere im Hinblick auf die Ausführung der Abdeckteil, die in einer besonders bevorzugten Ausführungsform des Verfahrens in ähnlicher Weise aus einer Menge von auf die Standardgeometrien der Kavitäten geometrisch angepassten vorgefertigten Abdeckteilen ausgewählt werden.

Die Abdeckteile können somit in großen Mengen vorgefertigt werden und können gemäß des Baukastenprinzips direkt zum Abdecken der Kavitäten mit Standardgeometrie eingesetzt werden.

Dies führt zu einer Reduktion der Fertigungskosten, da eine Individualanfertigung der Abdeckteile entfällt und darüber hinaus Fertigungszeiten zur Herstellung von Bauteilen durch das erfindungsgemäße Verfahren reduziert werden können.

In einer besonders bevorzugten Ausführungsform weisen die Standardgeometrien der Kavitäten allgemein zylindrische Formen auf.

Diese verhältnismäßig einfachen Geometrien können schnell und auf einfache Weise durch materialabtragende Bearbeitung, insbesondere zerspanende Bearbeitung eingebracht werden, sodass die Fertigungszeiten weiter reduziert werden können.

In einer besonders bevorzugten Ausführungsform des erfindungsgemäßen Verfahrens umfasst dieses ein Einbringen von zumindest einem Zuleitungskanal und zumindest einem Ableitungskanal für das Kühlkanalsystem durch materialabtragende Bearbeitung in das Bauteil, wobei der Zuleitungskanal und der Ableitungskanal derart eingebracht werden, dass das Kühlkanalsystem durchgehend vom Zuleitungskanal zum Ableitungskanal verläuft.

Hierdurch wird ein durchgehendes Kühlkanalsystem bereitgestellt, durch welches ein von außerhalb des Bauteils durch den Zuleitungskanal zugeführtes Kühlmittel durch das Kühlkanalsystem im Inneren des Bauteils bis zum Ableitungskanal strömen kann und somit ein Kühlkreislauf zur Kühlung bzw. Wärmeableitung aus dem Bauteil bereitgestellt werden kann.

In einer besonders bevorzugten Ausführungsform des Verfahrens umfasst dieses weiterhin additives stoffschlüssiges Auftragen einer verschleißfesten Außenschicht auf einen Teil einer Außenkonturfläche des aus dem Aufbaumaterial aufgebauten Bauteils.

Angepasst auf die spätere Verwendung des Bauteils, z.B. als Werkzeug in anderen Herstellungs- und/oder Fertigungsverfahren, kann so eine verschleißfeste Oberfläche (bevorzugt aus Werkzeugstahl) gebildet werden, die auch größeren mechanischen Beanspruchungen standhalten kann.

In einer besonders bevorzugten Ausführungsform des Verfahrens erfolgt das additive stoffschlüssige Auftragen der verschleißfesten Außenschicht durch Auftragsschweißen mit Laser oder Lichtbogen, wobei eine Zufuhr eines zum Aufbau der verschleißfesten Außenschicht verwendeten Materials in Form von Pulver und/oder Draht erfolgt.

In einer besonders bevorzugten Ausführungsform des Verfahrens weist das Aufbaumaterial weiterhin eine Wärmeleitfähigkeit auf, die größer ist als eine Wärmeleitfähigkeit der verschleißfesten Außenschicht.

Somit kann in effizienter Weise ein Bauteil mit verbesserten Wärmeableitungseigenschaften und einer hohen Verschleißfestigkeit bereitgestellt werden. Durch die erhöhte Wärmeleitfähigkeit wird thermische Energie, welche über die Außenschicht in das Bauteil eintritt, schnell von der an das Aufbaumaterial angrenzenden Fläche der Außenschicht zum Kühlkanalsystem geleitet, sodass eine verbesserte Wärmeableitung innerhalb des gesamten Bauteils erzielt werden kann. Eine verbesserte Wärmeableitung eines durch das erfindungsgemäße Verfahren hergestellten Bauteils zielt dabei nicht nur auf einer Erhöhung der Abkühlraten sondern auch auf eine örtliche Gleichmäßigkeit der Abkühlung des Bauteils ab, insbesondere durch die im Zuge des erfindungsgemäßen Verfahrens platzierten Kavitäten in beispielsweise thermisch besonders stark beanspruchten Bereichen des Bauteils.

So können beispielsweise beim Einsatz des Bauteils, z.B. als Werkzeug, unerwünschte Verformungen durch örtlich unterschiedliche Abkühlgeschwindigkeiten zuverlässig vermieden werden.

So können beispielsweise bei Spritzgußteilen die Abkühlzeiten reduziert und bei Heißumformwerkzeugen die Kühlung verbessert werden, um erhöhten lokalen Verschleiß zu verhindern.

Gemäß eines weiteren Aspekts der Erfindung wird ein softwaregestütztes Computersystem vorgeschlagen, welches in Anspruch 14 definiert ist.

In einer besonders bevorzugten Ausführungsform umfasst das Computersystem weiterhin ein Mittel zur Ableitung von durch die numerisch gesteuerte Werkzeugmaschine und/oder das numerisch gesteuerte Bearbeitungszentrum zu verwertenden Steuerbefehlen zur Durchführung der Bearbeitungsschritte, sowie ein Mittel zur Übertragung der Steuerbefehle an die Werkzeugmaschine und/oder an das Bearbeitungszentrum, die zur Durchführung der Bearbeitungsschritte zur Herstellung des Bauteils eingerichtet sind.

In einer besonders bevorzugten Ausführungsform umfasst das Computersystem ferner ein CAD- und/oder ein CAM-System.

Weitere Aspekte und deren Vorteile als auch speziellere Ausführungsbeispiele der zuvor genannten Aspekte und Merkmale werden im Folgenden unter Zuhilfenahme der in den beigefügten Figuren gezeigten Zeichnungen beschrieben:
- Fig. 1a - Fig. 1f: zeigen in beispielhaften Querschnitten die schrittweise Herstellung eines Bauteils mit Kühlkanalsystem mittels des erfindungsgemäßen Verfahrens.
- Fig. 2: zeigt ein Bauteil mit Kühlkanalsystem, bestehend aus mehreren Kavitäten und Verbindungskanälen in einer perspektivischen transparenten Ansicht.
- Fig. 3a - Fig. 3b: zeigen vergrößerte Ansichten verschiedener Teilbereiche des Bauteils mit Kühlkanalsystem aus Fig. 2.
- Fig. 4: zeigt einen mittleren Teilbereich des in Fig. 2 gezeigten Bauteils in einer perspektivischen Querschnittsdarstellung.
- Fig. 5: zeigt ein Ausführungsbeispiel eines erfindungsgemäßen Verfahrens zur Herstellung eines Bauteils mit Kühlkanalsystem.

### Ausführliche Figurenbeschreibung

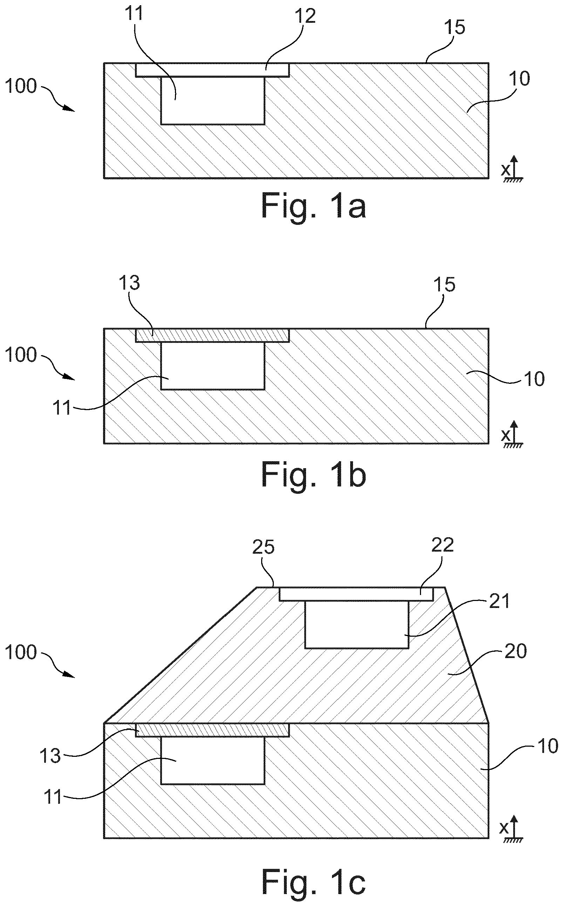

Fig. 1a zeigt ein exemplarisches Bauteil 100 nach einem im Zuge des erfindungsgemäßen Verfahrens durchgeführten Aufbaus eines ersten Abschnitts 10 durch additives stoffschlüssiges Auftragen eines Aufbaumaterials (=additiver Aufbau) in einem Querschnitt.

Der additive Aufbau erfolgt im gegebenen Beispiel entlang einer Aufbaurichtung x.

Eine erste Kavität 11 ist in den ersten Abschnitt 10 derart eingebracht, dass sie zu einer Außenfläche 15 des ersten Abschnitts 10 hin eine Öffnung aufweist.

Das Einbringen der ersten Kavität 11 kann hierbei im Zuge des additiven Aufbaus des ersten Abschnitts 10 durch Aussparungen an den betreffenden Stellen erfolgen, wobei eine Nachbearbeitung der an die erste Kavität 11 angrenzenden Oberflächen des ersten Abschnitts durch eine materialabtragende Bearbeitung, insbesondere eine zerspanende Bearbeitung, erfolgt, um die Oberflächengüte zu verbessern und so den Strömungswiderstand im Kühlkanalsystem zu verringern.

Alternativ kann die erste Kavität 11 im Anschluss an den additiven Aufbau des ersten Abschnitts 10 durch materialabtragende Bearbeitung, insbesondere zerspanende Bearbeitung, direkt in das Vollmaterial eingebracht werden.

Ferner ist an der Öffnung der ersten Kavität 11 an der Außenfläche 15 ein Absatz 12 in den ersten Abschnitt 10 durch materialabtragende Bearbeitung eingebracht, der dem späteren Einlegen eines Abdeckteils 13 dient (siehe Fig. 1b)

Fig. 1b zeigt das Bauteil nach einem Schritt des Abdeckens der Öffnung der ersten Kavität 10 durch ein Abdeckteil 13 im Querschnitt.

Das Abdeckteil 13 ist vorteilhafter flach und eben ausgeführt und weist eine im Verhältnis zu den übrigen Ausmaßen geringe Dicke auf. Das Abdeckteil verschließt die Öffnung der ersten Kavität vollständig.

Vorteilhafterweise sind der in den ersten Abschnitt 10 eingebrachte Absatz 12 an der ersten Kavität 10 und das Abdeckteil 13 formtechnisch derart aufeinander angepasst, dass eine Oberfläche des ebenen Abdeckteils 12 bündig mit der Außenfläche 15 des ersten Abschnitts abschließt und mit dieser zusammen vorzugsweise eine ebene Fläche bildet. Das Abdeckteil 13 wird vorzugsweise formschlüssig durch den eingebrachten Absatz 12 exakt in Position gehalten.

Fig. 1c zeigt das Bauteil 100 nach einem anschließenden Verfahrensschritt zum additiven Aufbau eines zweiten Abschnitts 20 im Querschnitt.

Der additive Aufbau des zweiten Abschnitts 20 erfolgt auf dem ersten Abschnitt 10 ausgehend von der Außenfläche 15 des ersten Abschnitts 10 und der mit der Außenfläche 15 bündig liegenden Oberfläche des Abdeckteils 13 der ersten Kavität 11 entlang der Aufbaurichtung x.

Durch das Abdecken der Öffnung der ersten Kavität 11 kann der additive Aufbau des zweiten Abschnitts 20 auch auf dem Abdeckteil 13 erfolgen, wodurch ein rein durch additives Auftragen erfolgendes Schließen der ersten Kavität 11, durch komplexe pyramiden- oder kegelförmige Geometrien entfällt und die erste Kavität 11 somit eine geometrische Form mit im Wesentlichen jeweils parallel gegenüberstehenden Seitenflächen bzw. Decken- und Bodenfläche aufweist.

Der additive Aufbau des zweiten Abschnitts 20 erfolgt entsprechend der Darstellung in Fig. 1c für das exemplarische Bauteil 100 ausgehend von der gesamten Außenfläche 15 des ersten Abschnitts 10 sowie von der bündig mit der Außenfläche 15 verlaufenden Oberfläche des Abdeckteils 13, wobei dies nicht als Einschränkung des erfindungsgemäßen Verfahrens zu verstehen ist. Der Aufbau des zweiten Abschnitts kann generell auch lediglich auf einem Teil der Außenfläche 15 (und nicht der ganzen Außenfläche) des ersten Abschnitts 10 des Bauteils 100 erfolgen.

Auch in den zweiten Abschnitt 20 des Bauteils 100 ist eine Kavität, eine zweite Kavität 21, durch materialabtragende Bearbeitung durch eines der im Zuge des Einbringens der ersten Kavität 11 bereits beschriebenen Verfahren (Aussparungen beim additiven Aufbau und materialabtragende Nachbearbeitung oder vollständiges Einbringen durch materialabtragende Bearbeitung) eingebracht.

Auch wenn die Darstellung in Fig. 1c nahelegt, dass die erste Kavität 11 und die zweite Kavität 21 eine gleiche oder ähnliche geometrische Form mit gleichen oder ähnlichen Abmessungen aufweisen, muss dies beim erfindungsgemäßen Verfahren generell nicht der Fall sein.

Die zweite Kavität 21 im zweiten Abschnitt 22 ist zu einer Außenfläche 25 des zweiten Abschnitts 20 hin geöffnet.

Ferner ist in analoger Weise zum Vorgehen bei der ersten Kavität 11 an der Öffnung der zweiten Kavität 21 an der Außenfläche 25 ein Absatz 22 durch materialabtragende Bearbeitung eingebracht.

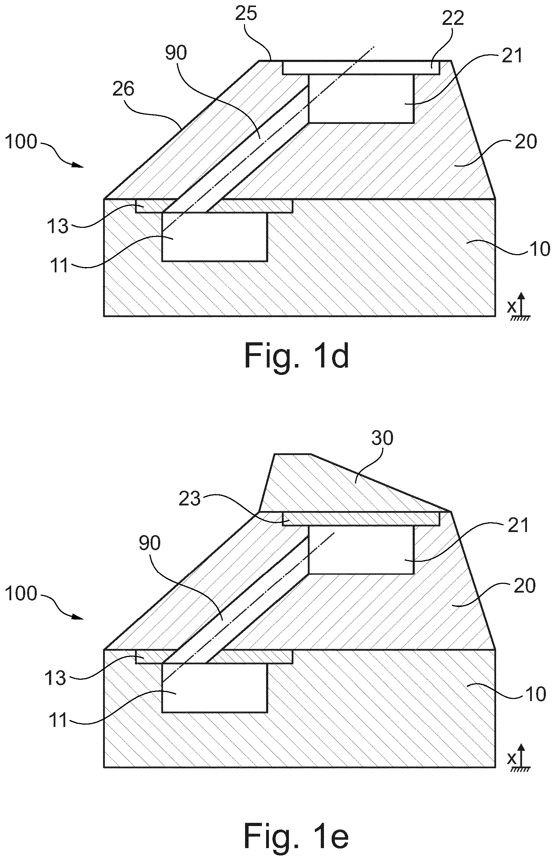

Fig. 1d zeigt das Bauteil 100 nach einem anschließenden Verfahrensschritt zum Einbringen eines Verbindungskanals 90 im Querschnitt.

Der Verbindungskanal 90 ist durch materialabtragende Bearbeitung derart in das Bauteil 100 eingebracht, dass dieser die erste Kavität 11 des ersten Abschnitts 10 mit der zweiten Kavität 21 des zweiten Abschnitts 20 verbindet.

Beim Verbinden der beiden Kavitäten 11 und 21 durch den Verbindungskanal 90 zur Ausbildung eines Kühlkanalsystems wird dabei zwangsläufig auch Material vom im Zuge des additiven Aufbaus im Bauteil eingeschlossene Abdeckteil 13 abgetragen, da sonst keine Verbindung zwischen den Kavitäten 11 und 21 hergestellt werden könnte.

Die materialabtragende Bearbeitung zur Einbringung des Verbindungskanals 90 kann hierbei unter anderem durch Laserbearbeitung oder zerspanende Bearbeitung, z.B. mittels eines Fräswerkzeugs oder eines Bohrkopfes, erfolgen, wobei eine zerspanende Bearbeitung aufgrund einer hohen Oberflächengüte der so eingebrachten Oberflächen zu bevorzugen ist.

Die materialabtragende Bearbeitung, z.B. das Einführen eines Bohrkopf, erfolgt ausgehend von der zweiten Kavität 22, wobei aufgrund des im Verhältnis zum Querschnitt des Verbindungskanals 90 größer ausfallenden Querschnitts der zweiten Kavität 21, der beispielhafte Bohrkopf problemlos durch das Bauteil 100 bis hin zur ersten Kavität 11 geführt werden kann, ohne dabei das Bauteil 100 auf unerwünschte Weise zu beschädigen, z.B. durch Kollision mit dem zweiten Abschnitt 20 in einem Bereich um die zweite Kavität 21.

Weiterhin gestattet die verhältnismäßig groß ausfallende zweite Kavität 22, dass der exemplarische Bohrkopf ausgehend von einer Lotrechten der Außenfläche 25 schräg in das Bauteil eingeführt werden kann. Durch die Möglichkeit, den Verbindungskanal 90 in einem entsprechenden Neigungswinkel zur Lotrechten der Außenfläche 25 einbringen zu können (ohne dabei den zweiten Abschnitt 20 auf unerwünschte Weise zu beschädigen), ergibt sich eine höhere Flexibilität bei der Ausbildung eines Kühlkanalsystems innerhalb des Bauteils 100.

Der Verbindungskanal 90 kann somit in vorteilhafter Wiese sowohl in steilen als auch in flachen Neigungswinkeln in Bezug zur Lotrechten der Außenfläche 25 eingebracht werden.

So kann der Verbindungskanal 90 entsprechend der Darstellung in Fig. 1d in einem Teilbereich des Bauteils 100 parallel (oder nahezu parallel) zu einer weiteren Außenfläche 26 des Bauteils 100 geführt werden. Daraus ergibt sich, dass in einem solchen abschnittsweisen Bereich verschiedene Oberflächenpunkte der weiteren Außenfläche 26 einen gleichen (oder nahezu gleichen) Abstand zum Verbindungskanal 90 haben. Dieser Abstand sollte vorteilhafterweise so gering wie möglich gewählt werden, um eine außenkonturnahe Führung des Kühlkanalsystems zu ermöglichen und so die Ableitung von beispielsweise durch die weitere Außenfläche 26 in das Bauteil 100 eintretender Wärme durch das mit einem Kühlmittel durchflossenen Kühlkanalsystems zu verbessern. Bei einer derartigen Einbringung des Verbindungskanals 90 als Teil des Kühlkanalsystems weist das Bauteil 100 in diesem Teilbereich eine weitestgehend gleichbleibende Materialstärke zwischen der weiteren Außenfläche 26 und Verbindungskanal 90 auf, wodurch ferner auch eine örtlich gleichförmige Wärmeableitung in dem betreffenden Teilbereich erzielt werden kann.

Fig. 1e zeigt das Bauteil 100 nach einem additiven Aufbau eines weiteren (dritten) Teils 30 zur Finalisierung des exemplarischen Bauteils 100 im Querschnitt.

Entsprechend des erfindungsgemäßen Verfahrens wird die Öffnung der zweiten Kavität 21 an der Außenfläche 25 im zweiten Abschnitt 20 durch ein auf den Absatz 22 angepasstes Abdeckteil 23 abgedeckt und verschlossen, wobei auch hier eine Oberfläche des Abdeckteils bündig mit der Außenfläche 25 abschließt.

Der additive Aufbau des dritten Abschnitts 30 erfolgt auf dem zweiten Abschnitt 20 ausgehend von der Außenfläche 25 des zweiten Abschnitts 20 und der mit der Außenfläche 25 bündig verlaufenden Oberfläche des Abdeckteils 23 der zweiten Kavität 21 entlang der Aufbaurichtung x.

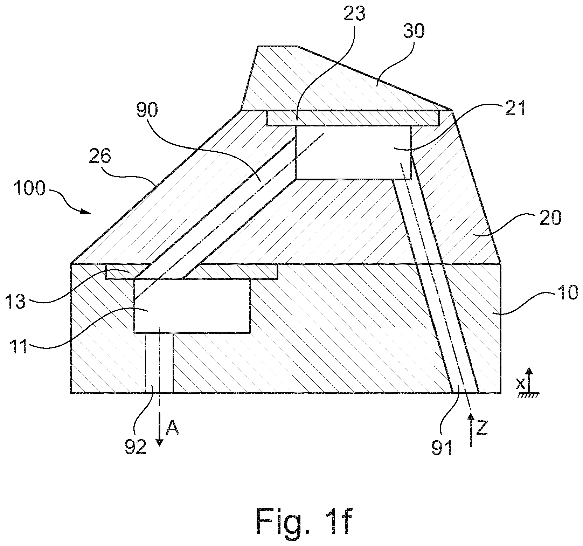

Fig. 1f zeigt das Bauteil 100 nach einer Finalisierung des Kühlkanalsystems durch Einbringen eines Zuleitungskanals 91 und eines Ableitungskanals 92 im Querschnitt.

Das Einbringen des Zu- sowie des Ableitungskanals 91 und 92 erfolgt durch materialabtragende Bearbeitung, wobei der Zu- und der Ableitungskanal 91 und 92 derart in das Bauteil 100 eingebracht werden, sodass eine spätere Durchleitung eines Kühlmittels ausgehend von einem Zulauf Z über das durch die Kavitäten 21,22 den Verbindungskanal 90 sowie den Zu- und den Ableitungskanal 91 und 92 gebildete Kühlkanalsystem bis hin zu einem Ablauf A möglich ist.

Die Positionen des Zulaufs Z und des Ablaufs A für das Kühlmittel sind generell nicht fest vorgegeben sondern können wahlweise auch vertauscht werden, sodass eine zu der in Fig. 1f dargestellten Fließrichtung umgekehrte Fließrichtung des durch das Kühlkanalsystem strömenden Kühlmittels vorliegt.

Auch der Zu- und Ableitungskanal 91 und 92 können derart durch das Bauteil 100 geführt werden, dass diese zumindest abschnittsweise einer Außenfläche des Bauteils 100 folgend, um so die Wärmeableitung zu verbessern.

Zu- und Ableitungskanal 91 und 92 sind vorteilhafterweise derart eingebracht, dass der Zulauf Z und der Ablauf A für das Kühlmittel in das Kühlkanalsystem des Bauteils 100 auf einer für die spätere Verwendung des Bauteils 100, z.B. als Spritzgusswerkzeug, weniger relevanten Außenfläche oder Außenflächen (A und Z nicht zwingend auf der gleichen Fläche bzw. Seite des Bauteils) angeordnet sind.

Das in Fig. 1f dargestellte Bauteil 100 mit finalisiertem Kühlkanalsystem verdeutlicht, dass ein Kühlkanalsystem mit einem derart komplexen geometrischen Aufbau keinesfalls durch im Anschluss an den vollständigen Aufbau des Bauteils 100, hier mit den drei Abschnitten 10, 20 und 30, erfolgender materialabtragender Bearbeitung, z.B. durch Bohrungen , erfolgen kann, sondern erst durch das erfindungsgemäße Verfahren zugänglich wird.

Ferner sind die an das innenliegende Kühlkanalsystem angrenzenden Oberflächen des Bauteils 100 vorteilhafterweise durch materialabtragende Bearbeitung, insbesondere durch zerspanende Bearbeitung, eingebracht oder zumindest nachbearbeitet worden. So kann eine, insbesondere im Vergleich zu einer durch einen rein additiven Aufbau geschaffenen Oberfläche, hohe Oberflächengüte der besagten Oberflächen, mit einer geringeren Rauigkeit erzielt werden. Auf diese Weise kann ein Strömungswiderstand eines durch das derartige Kühlkanalsystem strömenden Kühlmittels erheblich reduziert werden, sodass höhere Strömungsgeschwindigkeiten bzw. höhere Durchflussraten erzielt werden können, insbesondere im Vergleich zu einem durch rein additiven Aufbau (also ohne materialabtragende Bearbeitung/Nachbearbeitung) gefertigten Kühlkanalsystems, welches per se eine geringere Oberflächengüte und damit einen höheren Strömungswiderstand für das Kühlmittel aufweisen würde.

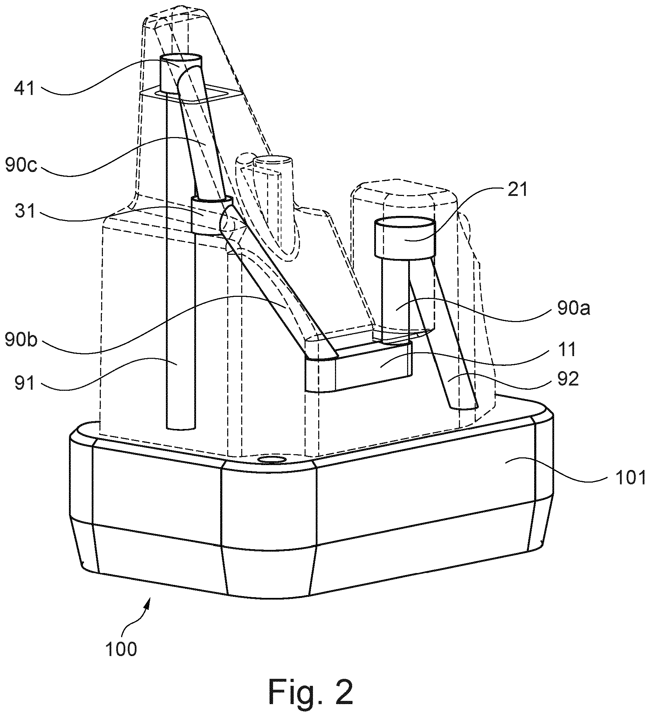

Fig. 2 zeigt ein anderes durch das erfindungsgemäße Verfahren fertig hergestelltes Bauteil mit Kühlkanalsystem, welches mehreren Kavitäten und mehrere Verbindungskanäle aufweist, in einer perspektivischen transparenten Ansicht.

Im Gegensatz zu den Darstellungen in den Fig. 1a bis 1f zeigt Fig. 2 ein Bauteil 100 mit komplexerer Außengeometrie und komplexer Geometrie des innerhalb des Bauteils 100 verlaufenden Kühlkanalsystems.

Das Bauteil 100 ist mit Hilfe des erfindungsgemäßen Verfahrens hergestellt, wodurch aufgrund des hybriden Verfahrenscharakters aus abwechselnd erfolgenden additiven Aufbauschritten und materialabtragenden Bearbeitungsschritten ein innerhalb des Bauteils 100 liegendes Kühlkanalsystems ausgebildet werden kann, in Folge dessen das Bauteil (bei einem Kühlmitteldurchfluss) verbesserte Wärmeableitungseigenschaften aufweist.

Das Bauteil wird durch additives stoffschlüssiges Auftragen eines Aufbaumaterials auf einem Grundkörper 101 des Bauteils 101 aufgebaut.

Im Zuge des erfindungsgemäßen Verfahrens sind in vorteilhafter Weise eine erste Kavität 11 und eine zweite Kavität 21 sowie zwei weitere Kavitäten, eine dritte Kavität 31 und eine vierte Kavität 41, in das Bauteil eingebracht, die jeweils durch eine zerspanende Bearbeitung, eingebracht sind. Zusätzlich können die an die Kavitäten 11, 21, 31 und 41 angrenzenden Oberflächen zur Verbesserung der Oberflächengüte z.B. durch weitere materialabtragende Bearbeitung nachbearbeitet sein.

In vorteilhafter Weise werden die Geometrien der Kavitäten aus einer Menge von Standardgeometrien ausgewählt, wobei diese vorzugsweise einfache zylindrische und/oder allgemein zylindrische Geometrien unterschiedlichster Abmessungen umfassen. Unter allgemein zylindrischen Geometrien sind Geometrien zu verstehen, die durch Extrusion einer beliebig geformten Grundfläche (z.B. Kreis, Ellipse, Vieleck etc.) entlang einer Extrusionsachse gebildet werden.

Die zweite, dritte und vierte Kavität 21, 31 und 41 weisen dabei zylindrische Formen mit kreisrundem Querschnitt auf, wobei sich Abmessungen der zylindrischen Formen der einzelnen Kavitäten sowohl in Durchmesser der kreisrunden Querschnitte als auch in Höhen der Zylinder unterscheiden.

Die erste Kavität 11 weist dagegen eine allgemein zylindrische Form mit nichtkreisrundem Querschnitt auf.

Im Zuge des Herstellung des Bauteils durch das erfindungsgemäße Verfahren sind die Kavitäten 11, 21, 31 und 41 zur Ausbildung des Kühlkanalsystems miteinander durch Verbindungskanäle 90a, 90b und 90c verbunden, die durch materialabtragende Bearbeitung, insbesondere durch zerspanende Bearbeitung, in das Bauteil 100 eingebracht sind.

Der Verbindungskanal 90a verbindet die erste Kavität 11 mit der zweiten Kavität 21, der Verbindungskanal 90b verbindet die erste Kavität 11 mit der dritten Kavität 31 und der Verbindungskanal 90c verbindet die dritte Kavität 31 mit der vierten Kavität 41.

Eine Fließrichtung eines durch das Kühlkanalsystem strömenden Kühlmittels wäre somit entweder in der Abfolge
zweite Kavität 21 -> Verbindungskanal 90a -> erste Kavität 11 -> Verbindungskanal 90b -> dritte Kavität 31 -> Verbindungskanal 90c -> vierte Kavität 41
oder in entsprechend umgekehrten Abfolge möglich.

Ausgehend vom Grundkörper 101 des Bauteils 100 sind zudem ein Zuleitungskanal 91 und ein Ableitungskanal 92 für das Kühlmittel durch materialabtragende Bearbeitung in das Bauteil 101 zur Finalisierung des Kühlkanalsystems eingebracht.

Die Festlegung des Zuleitungskanals 91 und des Ableitungskanals 92 und damit einer Fließrichtung vom Zuleitungskanal 91 zum Ableitungskanal 92 ist vorliegend nicht als abschließend zu verstehen, da das Kühlmittel ebenso auch in einer zu dieser entgegen gesetzten Fließrichtung durch das Kühlkanalsystem strömen kann.

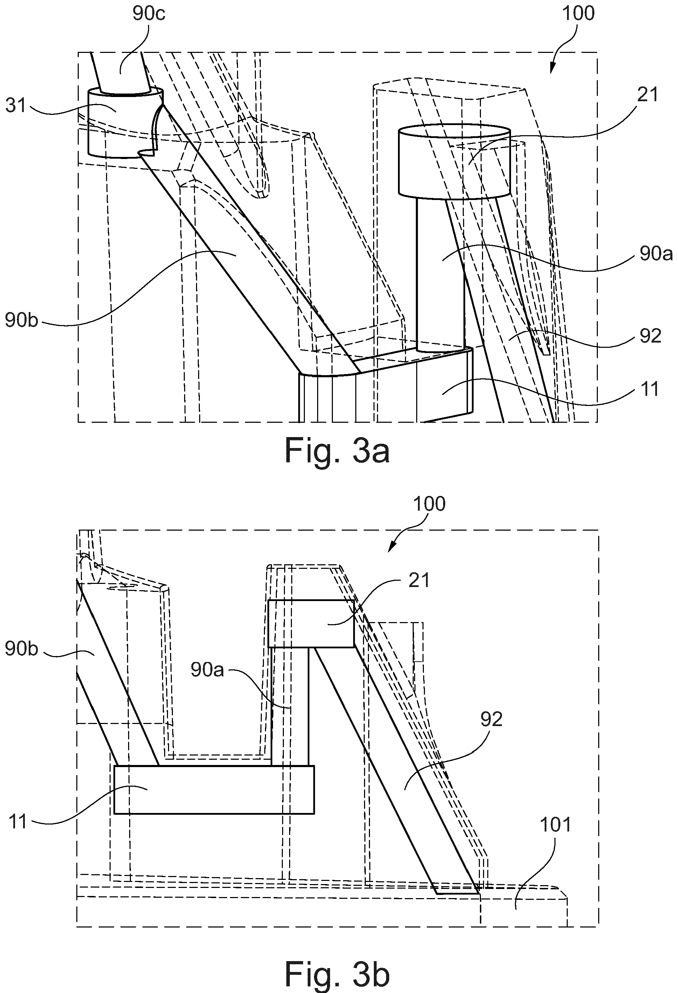

Fig. 3a zeigt einen perspektivischen Ausschnitt des Bauteils aus Fig. 2 in einem mittleren Teilbereich.

Der Ausschnitt zeigt, dass die Verbindungskanäle 90a und 90b zur Verbindung der Kavitäten 11, 21 und 31 derart in das Bauteil 100 eingebracht sind, dass diese zumindest abschnittsweise Außenkonturen bzw. Außenkonturflächen des Bauteils 100 folgen; also parallel oder annähernd parallel zu diesen verlaufen, und somit endkonturnah ausgebildet sind

Fig. 3b zeigt den in Fig. 3a dargestellten Ausschnitt des Bauteils aus Fig. 2 in einem mittleren Teilbereich in einer Seitenansicht.

Die Seitenansicht zeigt, dass neben den Verbindungskanälen 90a und 90b zur Verbindung der Kavitäten 11, 21 und 31 auch der Ableitungskanal 92 des Kühlkanalsystems derart in das Bauteil 100 eingebracht ist, dass dieser zumindest abschnittsweise einer Außenkontur bzw. einer Außenkonturfläche des Bauteils 100 folgt; also parallel oder annähernd parallel zu dieser verläuft.

Der Ableitungskanal 92 des Kühlkanalsystems mündet in der in Fig. 3b gezeigten Darstellung in den Grundkörper 101, von dem ausgehend eine Anbindung des Kühlkanalsystems an eine zur Versorgung des Kühlkanalsystems eingerichtete Kühlmittelversorgungseinheit erfolgt.

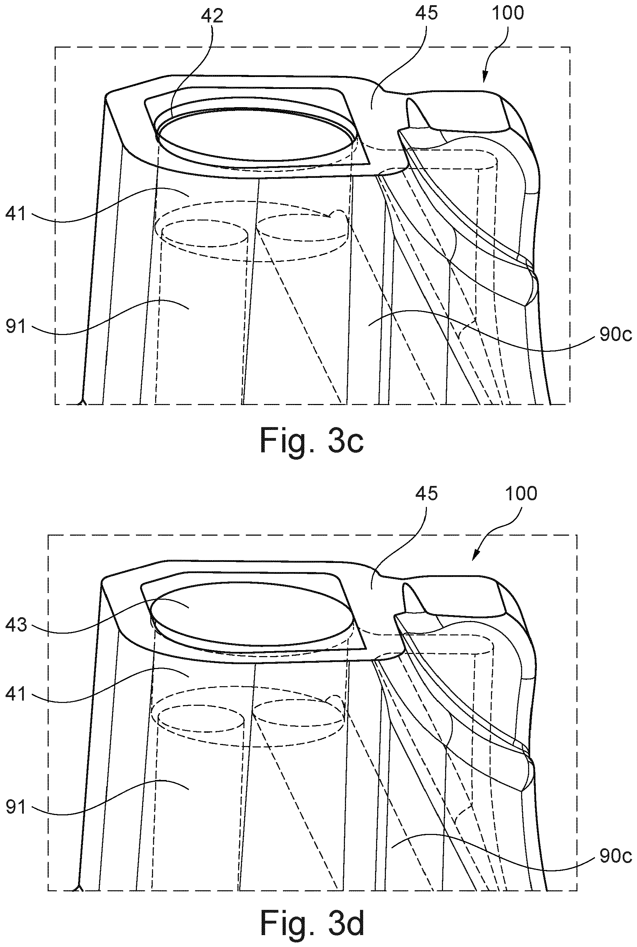

Fig. 3c zeigt einen perspektivischen Ausschnitt des Bauteils aus Fig. 2 nach einem Zwischenschritt des erfindungsgemäßen Verfahrens zur Herstellung des Bauteils in einem oberen Teilbereich.

In der gezeigten Darstellung sind die sich an die Einbringung der vierten Kavität 41 anschließende Verfahrensschritte des Abdeckens der Öffnung der vierten Kavität 41 an einer Außenfläche 45 mittels eines Abdeckteils 43 (hier nicht gezeigt, siehe Fig. 3d) sowie ein auf der Außenfläche 45 erfolgender additiver Aufbau eines letzten Abschnitts des in Fig. 2 gezeigten Bauteils 100, noch nicht erfolgt.

Die Außenfläche 45 ist hierbei lediglich eine im Zuge der vorherigen Verfahrensschritte gebildete, außenliegende Fläche und vorliegend keine Außenfläche des fertig hergestellten Bauteils.

Der additive Aufbau des Bauteils ist hierbei bis zur Außenfläche 45 erfolgt.

Ferner ist an der Öffnung der vierten Kavität 41 an der Außenfläche 45 ein zur Aufnahme des hier nicht gezeigten Abdeckteils 43 ausgebildeter Absatz 42 durch materialabtragende Bearbeitung, insbesondere durch zerspanende Bearbeitung, eingebracht.

Die geometrische Form des Absatzes 42 ist dabei an die zylindrische Form der vierten Kavität angepasst und derart ausgebildet, dass das im Zuge der anschließenden Verfahrensschritte platzierte Abdeckteil 43 formschlüssig in Position gehalten wird.

Fig. 3d zeigt einen perspektivischen Ausschnitt des Bauteils aus Fig. 2 nach einem weiteren Zwischenschritt des erfindungsgemäßen Verfahrens zur Herstellung des Bauteils in einem oberen Teilbereich.

Im Anschluss an den in Fig. 3c gezeigten Zustand des Bauteils im Laufe der erfindungsgemäßen Fertigungsverfahrens ist die Öffnung der vierten Kavität 41 an der Außenfläche 45 durch das auf den Absatz 42 angepasste Abdeckteil 43 abgedeckt worden.

Das Abdeckteil 43 ist derart gestaltet, dass (passend zum Absatz 42) zum Abdecken der vierten Kavität in den Absatz 42 eingelegt werden kann und dort formschlüssig positioniert ist, wobei eine Oberfläche des Abdeckteils 42 gegenüber der Außenfläche 45 des Bauteils geringfüg versenkt ist.

So wird ein definierter Abschluß gebildet, auf den im Zuge der sich anschließenden Verfahrensschritte ein additiver Aufbau des letzten Abschnitts des in Fig. 2 gezeigten Bauteils erfolgen kann.

Die im Zuge des erfindungsgemäßen Verfahrens verwendeten Abdeckteile, hier Abdeckteil 43, werden vorzugsweise aus einer Menge von auf die Standardgeometrien der Kavitäten geometrisch angepassten vorgefertigten Abdeckteile ausgewählt.

Entsprechend der zylindrischen Geometrie der vierten Kavität 41 weist das Abdeckteil 43 eine darauf angepasste kreisrunde flache Geometrie auf und ist vorzugsweise als dünne flache Blechronde ausgebildet.

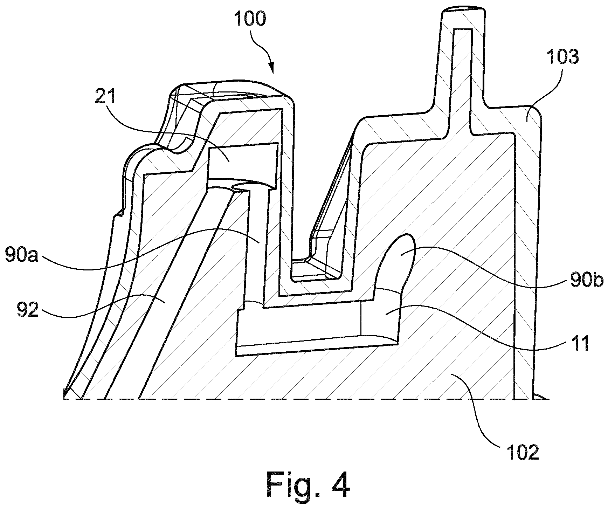

Fig. 4 zeigt einen mittleren Teilbereich des in Fig. 2 gezeigten Bauteils in einer perspektivischen Querschnittsdarstellung.

Die Darstellung zeigt den unterschiedlichen materiellen Aufbau des Bauteils 100 mit Kühlkanalsystem.

Das im Zuge des erfindungsgemäßen Verfahrens hergestellte Bauteil weist einen aus dem Aufbaumaterial gefertigten Kernkörper 102 auf, in welchem das Kühlkanalsystem ausgebildet ist.

Ferner ist auf einer Außenkonturfläche des Kernkörpers 102 durch additives stoffschlüssiges Auftragen eine weiteren Materials eine verschleißfeste Außenschicht 103 gebildet. Das weitere Material weist dabei eine höhere Verschleißfestigkeit auf als die des Aufbaumaterials, aus dem der Kernkörper 102 gebildet ist.

Andererseits weist das Aufbaumaterial, aus dem der Kernkörper 102 gebildet ist, vorzugsweise eine höhere Wärmeleitfähigkeit auf als das weitere Material, aus dem die verschleißfeste Außenschicht 103 gebildet ist.

Die dadurch ausgebildete Kombination vereint in vorteilhafter Weise die besseren Wärmeleitungseigenschaften des Kernkörpers 102, in dem das Kühlkanalsystem ausgebildet ist, mit der hohen Verschleißfestigkeit der verschleißfesten Außenschicht 103.

In einer möglichen Ausgestaltung ist das wärmeleitfähige Aufbaumaterial Kupfer oder eine Kupferlegierung und die verschleißfeste Außenschicht ist aus Werkzeugstahl gebildet.

Da das Kühlkanalsystem im Zuge des erfindungsgemäßen Verfahrens durch materialabtragende Bearbeitung in den Kernkörper 102 eingebracht wird, können überdies der Bearbeitungsaufwand sowie die Bearbeitungskosten reduziert werden, da der wärmeleitfähigere Kernkörper 102, z.B. Kupferlegierung, eine üblicherweise geringere Festigkeit als das weitere Material der verschleißfesten Außenschicht 103, z.B. Werkzeugstahl, aufweist und damit eine materialabtragende Bearbeitung am Kernkörper vereinfacht wird.

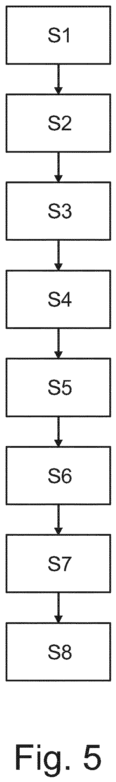

Ein Ausführungsbeispiel eines erfindungsgemäßen Verfahrens zur Herstellung eines Bauteils mit Kühlkanalsystem ist in Figur 5 schematisch dargestellt:
In Schritt S1 erfolgt der Aufbau eines ersten Abschnitts des Bauteils durch additives stoffschlüssiges Auftragen eines Aufbaumaterials.
In Schritt S2 erfolgt das Einbringen einer ersten Kavität mit einer Öffnung in den ersten Abschnitt des Bauteils.
In Schritt S3 erfolgt ein teilweises oder vollständiges Abdecken der Öffnung der ersten Kavität im ersten Abschnitt durch ein Abdeckteil.
In Schritt S4 erfolgt der Aufbau eines zweiten Abschnitts des Bauteils durch additives stoffschlüssiges Auftragen des Aufbaumaterials, wobei das Aufbaumaterial auf dem ersten Abschnitt und mindestens auf dem Abdeckteil und ggfs. zusätzlich auf dem ersten Abschnitt aufgetragen wird.
In Schritt S5 erfolgt das Einbringen einer zweiten Kavität in den zweiten Abschnitt des Bauteils.
In Schritt S6 erfolgt das Einbringen eines Verbindungskanals in das Bauteil zumindest teilabschnittsweise durch materialabtragende Bearbeitung zur Ausbildung des Kühlkanalsystems, wobei der Verbindungskanal die zweite Kavität des zweiten Abschnitts mit der ersten Kavität des ersten Abschnitts des Bauteils verbindet.

Bei diesem Ausführungsbeispiel erfolgt die Einbringung der beiden Kavitäten durch Auslassung der entsprechenden Bereiche im Rahmen des Materialauftrags.

Die Einbringung des Verbindungskanals zur Verbindung der beiden Kavitäten erfolgt durch zerspanende Bearbeitung.

Bei einer besonderen Ausführungsform des dargestellten Ausführungsbeispiels weist das Verfahren zusätzlich den Schritt S7 auf, in dem eine durch Auslassung des entsprechenden Bereichs erzeugte Öffnung der zweiten Kavität des zweiten Abschnitts durch ein Abdeckteil ebenfalls teilweise oder vollständig abgedeckt wird.

In Schritt S8 erfolgt daraufhin der Aufbau eines weiteren Abschnitts des Bauteils durch additives stoffschlüssiges Auftragen eines Aufbaumaterials, wobei das Aufbaumaterial mindestens auf das Abdeckteil der Öffnung der zweiten Kavität und ggf. auch auf den zweiten Abschnitt aufgetragen wird, um so eine bessere, stoffschlüssige Verbindung und einen Abschluss der Öffnung zu gewährleisten.

Wie vorstehend beschrieben, können diese Schritte weiter wiederholt werden, um auf diese Weise sukzessiv weitere Abschnitte mit Kavitäten aufzubauen, die dann nachfolgend durch Einbringen der Verbindungskanäle verbunden werden. Erfindungsgemäß werden dabei die Verbindungskanäle zumindest teilweise durch materialabtragende Bearbeitung hergestellt, während erfindungsgemäß der Aufbau der Kavität zumindest teilweise durch additives, stoffschlüssiges Auftragen des Aufbaumaterials im Rahmen der vorliegenden Erfindung erfolgt.

Vorstehend wurden Ausführungsbeispiele der vorliegenden Erfindung sowie deren Vorteile detailliert unter Bezugnahme auf die beigefügten Figuren beschrieben.

### Liste der Bezugszeichen

- 10: erster Abschnitt
- 11: erste Kavität
- 12: Absatz an Öffnung der ersten Kavität
- 13: Abdeckteil zum Abdecken der ersten Kavität
- 15: Außenfläche des ersten Abschnitts

- 20: zweiter Abschnitt
- 21: zweite Kavität
- 22: Absatz an Öffnung der zweiten Kavität
- 23: Abdeckteil zum Abdecken der zweiten Kavität
- 25: Außenfläche des zweiten Abschnitts
- 26: weitere Außenfläche des zweiten Abschnitts

- 31: dritte Kavität

- 41: vierte Kavität
- 42: Absatz an Öffnung der vierten Kavität
- 43: Abdeckteil zum Abdecken der vierten Kavität
- 45: Außenfläche

- 90, 90a, 90b, 90c: Verbindungskanal

- 91: Zuleitungskanal
- 92: Ableitungskanal

- 100: Bauteil
- 101: Grundkörper des Bauteils
- 102: Kernkörper des Bauteils
- 103: verschleißfeste Außenschicht

- Z: Zulauf
- A: Ablauf
- x: Aufbaurichtung

## Patentansprüche

1. Verfahren zur Herstellung eines Bauteils (100) mit Kühlkanalsystem, umfassend:
- Aufbau eines ersten Abschnitts (10) des Bauteils (100) durch additives stoffschlüssiges Auftragen eines Aufbaumaterials,
- Einbringen einer ersten Kavität (11) mit einer Öffnung in den ersten Abschnitt (10) des Bauteils (100),
**dadurch gekennzeichnet, dass** das Verfahren ferner umfasst:
- teilweises oder vollständiges Abdecken der Öffnung der ersten Kavität (11) im ersten Abschnitt (10) durch ein Abdeckteil (13),
- Aufbau eines zweiten Abschnitts (20) des Bauteils (100) durch additives stoffschlüssiges Auftragen des Aufbaumaterials, wobei das Aufbaumaterial mindestens auf das Abdeckteil (13) und ggfs. zusätzlich auf den ersten Abschnitt (10) aufgetragen wird,
- Einbringen einer zweiten Kavität (21) in den zweiten Abschnitt (20) des Bauteils,
- Einbringen eines Verbindungskanals (90; 90a) in das Bauteil (100) zumindest teilabschnittsweise durch materialabtragende Bearbeitung zur Ausbildung des Kühlkanalsystems, wobei der Verbindungskanal die zweite Kavität (21) des zweiten Abschnitts (20) mit der ersten Kavität (11) des ersten Abschnitts (10) des Bauteils (100) verbindet.

2. Verfahren nach Anspruch 1, **dadurch gekennzeichnet, dass** das Einbringen der ersten (11) und/oder der zweiten Kavität (21) und/oder das Einbringen des Verbindungskanals im Anschluss an den Aufbau der jeweiligen Abschnitte (10; 20) zumindest teilabschnittsweise durch materialabtragende Bearbeitung erfolgt.

3. Verfahren nach Anspruch 2, **dadurch gekennzeichnet, dass** die materialabtragende Bearbeitung zur Einbringung der ersten (11) und/oder der zweiten Kavität (21) und/oder des Verbindungskanals eine zerspanende Bearbeitung ist.

4. Verfahren nach Anspruch 1, **dadurch gekennzeichnet, dass** das Einbringen der ersten (11) und/oder der zweiten Kavität (21) und/oder das Einbringen des Verbindungskanals zumindest abschnittsweise im Zuge des Aufbaus der jeweiligen Abschnitte (10, 20) durch Auslassungen beim additiven stoffschlüssigen Auftragen des Aufbaumaterials erfolgt.

5. Verfahren nach Anspruch 4, **dadurch gekennzeichnet, dass** die an die im Zuge des Aufbaus der Abschnitte (10; 20) eingebrachten Kavitäten (11; 21) angrenzenden Oberflächen der Abschnitte (10; 20) durch zerspanende Bearbeitung nachbearbeitet werden.

6. Verfahren nach einem der vorherigen Ansprüche, **dadurch gekennzeichnet, dass** das Verfahren weiterhin die Schritte umfasst:
- teilweises oder vollständiges Abdecken einer Öffnung der zweiten Kavität (21) des zweiten Abschnitts (20) durch ein Abdeckteil (23),
- Aufbau eines weiteren Abschnitts (30; 40) des Bauteils (100) durch additives stoffschlüssiges Auftragen des Aufbaumaterials, wobei das Aufbaumaterial mindestens auf das Abdeckteil (23) der Öffnung der zweiten Kavität (21) und ggfs. auch auf den zweiten Abschnitt (20) aufgetragen wird, sowie
ZS1: Einbringen weiterer Kavitäten (31; 41) mit einer Öffnung in einen der zuvor bereits aufgebauten Abschnitte (10; 20) des Bauteils (100), wobei das Einbringen der weiteren Kavität (31; 41) im Anschluss an den Aufbau des jeweils zuvor bereits aufgebauten Abschnitts (10; 20) durch materialabtragende Bearbeitung oder im Zuge des Aufbaus des zuvor bereits aufgebauten Abschnitts (10; 20) durch Auslassungen beim additiven stoffschlüssigen Auftragen des Aufbaumaterials erfolgt,
ZS2: Einbringen ein oder mehrerer Verbindungskanäle (90; 90a; 90b; 90c) in das Bauteil (100) durch materialabtragende Bearbeitung, bei der es sich insbesondere um eine zerspanende Bearbeitung handelt, zur weiteren Ausbildung des Kühlkanalsystems, wobei der oder die Verbindungskanäle (90; 90a; 90b; 90c) weitere Kavität (31; 41) aus Schritt ZS1 mit einer oder mehreren der davor eingebrachten Kavitäten (11; 21) in den zuvor aufgebauten Abschnitten (10; 20) des Bauteils (100) verbindet,
ZS3: teilweises oder vollständiges Abdecken der Öffnung der weiteren Kavität/en (31; 41) aus Schritt ZS1 durch ein Abdeckteil (43),
ZS4: Aufbau ein oder mehrerer weiterer Abschnitte des Bauteils (100) durch additives stoffschlüssiges Auftragen des Aufbaumaterials, wobei das Aufbaumaterial auf ein oder mehrere der zuvor aufgebauten Abschnitte und auf dem Abdeckteil (43) des vorangegangen Schritts ZS3 aufgetragen wird.

7. Verfahren nach Anspruch 6, **dadurch gekennzeichnet, dass** das Verfahren weiterhin umfasst:
- Mehrere Wiederholungen der Verfahrensschrittabfolge ZS1 bis ZS4 zur Herstellung des Bauteils (100) mit einer Vielzahl von Abschnitten (10, 20) und einem innerhalb des Bauteils (100) ausgebildeten Kühlkanalsystems, welches aus einer Vielzahl von Kavitäten (11; 21; 31; 41) und einer Vielzahl von Verbindungskanälen (90; 90a;90b;90c; 90d) zur Verbindung der Vielzahl von Kavitäten gebildet ist.

8. Verfahren nach einem der vorherigen Ansprüche, **dadurch gekennzeichnet, dass** das additive stoffschlüssige Auftragen des Aufbaumaterials durch Auftragsschweißen mit Laser oder Lichtbogen erfolgt und die Zufuhr des Aufbaumaterials in Form von Pulver und/oder Draht erfolgt.

9. Verfahren nach einem der vorherigen Ansprüche, **dadurch gekennzeichnet, dass** in einem Bereich um die Öffnung(en) von ein oder mehreren der Kavitäten (11; 21; 31; 41) in den jeweiligen Abschnitten durch materialabtragende Bearbeitung auf Geometrien der zum Abdecken der jeweiligen Öffnungen ausgeführten Abdeckteile (13; 23; 43), bei denen es sich insbesondere um Blechronden oder Blechabdeckungen handelt, angepasste vertiefte Absätze (12; 22; 42) derart ausgebildet ist, dass die jeweiligen Abdeckteile (13; 23; 43) zum Abdecken der jeweiligen Öffnungen formschlüssig in Position gehalten werden.

10. Verfahren nach einem der vorherigen Ansprüche, **dadurch gekennzeichnet, dass** Geometrien der Kavitäten (11; 21; 31; 41) aus einer Menge vorbestimmter Standardgeometrien der Kavitäten ausgewählt werden, die insbesondere allgemein zylindrische Formen aufweisen, und die Abdeckteile (13; 23; 43) aus einer Menge von auf die Standardgeometrien der Kavitäten geometrisch angepassten vorgefertigten Abdeckteilen ausgewählt werden.

11. Verfahren nach einem der vorherigen Ansprüche, **dadurch gekennzeichnet, dass** das Verfahren weiterhin umfasst:
- Einbringen von zumindest einem Zuleitungskanal (91) und zumindest einem Ableitungskanal (92) für das Kühlkanalsystem durch materialabtragende Bearbeitung in das Bauteil (100), wobei der Zuleitungskanal (91) und der Ableitungskanal (92) derart eingebracht werden, dass das Kühlkanalsystem durchgehend vom Zuleitungskanal (91) zum Ableitungskanal (92) verläuft.

12. Verfahren nach einem der vorherigen Ansprüche, **dadurch gekennzeichnet, dass** das Verfahren weiterhin umfasst:
- additives stoffschlüssiges Auftragen von verschiedenen Materialien mit unterschiedlicher Verschleißfestigkeit als Aufbaumaterial aufgebauten Bauteils (100).

13. Verfahren nach Anspruch 12, **dadurch gekennzeichnet, dass** das Aufbaumaterial um den Kühlkanal herum eine Wärmeleitfähigkeit aufweist, die größer ist als eine Wärmeleitfähigkeit einer verschleißfesten Außenschicht (103).

14. Softwaregestütztes Computersystem, **dadurch gekennzeichnet, dass** das Computersystem zur Konstruktionsplanung eines durch das Verfahren gemäß einem der Ansprüche 1 bis 13 herzustellenden Bauteils (100) eingerichtet ist und dazu zumindest umfasst:
- Mittel zur Definition einer Bauteilgeometrie des Bauteils (100) mit Kühlkanalsystem, insbesondere durch Auswahl einer Geometrie eines Kühlkanalabschnitts aus einer Gruppe vorgegebener, geometrisch vorbestimmter Kavitäten,
- Mittel zur Bestimmung nacheinander erfolgender durch eine numerisch gesteuerte Werkzeugmaschine und/oder ein numerisch gesteuertes Bearbeitungszentrum durchführbarer Bearbeitungsschritte zur Herstellung des Bauteils (100) mittels der Schritte nach einem der Ansprüche 1 bis 13.

15. Softwaregestütztes Computersystem nach Anspruch 14, **dadurch gekennzeichnet, dass** das Computersystem weiterhin umfasst:
- Mittel zur Ableitung von durch die numerisch gesteuerte Werkzeugmaschine und/oder das numerisch gesteuerte Bearbeitungszentrum zu verwertenden Steuerbefehlen zur Durchführung der Bearbeitungsschritte,
- Mittel zur Übertragung der Steuerbefehle an die Werkzeugmaschine und/oder das Bearbeitungszentrum, die zur Durchführung der Bearbeitungsschritte zur Herstellung des Bauteils (100) eingerichtet sind.

## Claims

1. Method for producing a component (100) with a cooling channel system, comprising:
- building up a first section (10) of the component (100) by additive material-bonding application of a build-up material,
- introducing a first cavity (11) with an opening into the first section (10) of the component (100),
**characterized in that** the method further comprises:
- partially or completely covering the opening of the first cavity (11) in the first section (10) by a cover part (13),
- building up a second section (20) of the component (100) by additive material-bonding application of the build-up material, wherein the build-up material is applied at least to the cover part (13) and optionally additionally to the first section (10),
- introducing a second cavity (21) into the second section (20) of the component,
- introducing a connecting channel (90; 90a) into the component (100) at least partially in sections by material-removing machining to form the cooling channel system, wherein the connecting channel connects the second cavity (21) of the second section (20) to the first cavity (11) of the first section (10) of the component (100).

2. Method according to claim 1, **characterized in that** the introduction of the first (11) and/or the second cavity (21) and/or the introduction of the connecting channel is carried out at least partially in sections by material-removing machining following the build-up of the respective sections (10; 20).

3. Method according to claim 2, **characterized in that** the material-removing machining for introducing the first (11) and/or the second cavity (21) and/or the connecting channel is machining.

4. Method according to claim 1, **characterized in that** the introduction of the first (11) and/or the second cavity (21) and/or the introduction of the connecting channel is carried out at least partially in the course of the build-up of the respective sections (10, 20) by omissions during the additive material-bonding application of the build-up material.

5. Method according to claim 4, **characterized in that** the surfaces of the sections (10; 20) adjoining the cavities (11; 21) introduced in the course of the build-up of the sections (10; 20) are reworked by machining.

6. Method according to one of the preceding claims, **characterized in that** the method further comprises the steps of:
- partially or completely covering an opening of the second cavity (21) of the second section (20) by a cover part (23),
- building up a further section (30; 40) of the component (100) by additive material-bonding application of the build-up material, wherein the build-up material is applied at least to the cover part (23) of the opening of the second cavity (21) and optionally also to the second section (20), and
ZS1: introducing further cavities (31; 41) with an opening into one of the previously already built-up sections (10; 20) of the component (100), wherein the introduction of the further cavity (31; 41) is carried out following the build-up of the respective previously already built-up section (10; 20) by material-removing machining or in the course of the build-up of the previously already built-up section (10; 20) by omissions during the additive material-bonding application of the build-up material,
ZS2: introducing one or more connecting channels (90; 90a; 90b; 90c) into the component (100) by material-removing machining, which is in particular machining, for further forming the cooling channel system, wherein the connecting channel or channels (90; 90a; 90b; 90c) connect further cavity (31; 41) from step ZS1 to one or more of the previously introduced cavities (11; 21) in the previously built-up sections (10; 20) of the component (100),
ZS3: partially or completely covering the opening of the further cavity or cavities (31; 41) from step ZS1 by a cover part (43),
ZS4: building up one or more further sections of the component (100) by additive material-bonding application of the build-up material,
wherein the build-up material is applied to one or more of the previously built-up sections and to the cover part (43) of the preceding step ZS3.

7. Method according to claim 6, **characterized in that** the method further comprises:
- a plurality of repetitions of the method step sequence ZS1 to ZS4 for producing the component (100) with a multiplicity of sections (10, 20) and a cooling channel system which is formed within the component (100) and which is formed from a multiplicity of cavities (11; 21; 31; 41) and a multiplicity of connecting channels (90; 90a; 90b; 90c; 90d) for connecting the multiplicity of cavities.

8. Method according to one of the preceding claims, **characterized in that** the additive material-bonding application of the build-up material is carried out by deposition welding with a laser or electric arc and the supply of the build-up material is carried out in the form of powder and/or wire.

9. Method according to one of the preceding claims, **characterized in that**, in a region around the opening or openings of one or more of the cavities (11; 21; 31; 41) in the respective sections, recessed shoulders (12; 22; 42) which are adapted to geometries of the cover parts (13; 23; 43) which are designed to cover the respective openings and which are in particular circular sheet metal blanks or sheet metal covers are formed by material-removing machining in such a way that the respective cover parts (13; 23; 43) are held in position in a form-fitting manner for covering the respective openings.

10. Method according to one of the preceding claims, **characterized in that** geometries of the cavities (11; 21; 31; 41) are selected from a set of predetermined standard geometries of the cavities which in particular have generally cylindrical shapes, and the cover parts (13; 23; 43) are selected from a set of prefabricated cover parts which are geometrically adapted to the standard geometries of the cavities.

11. Method according to one of the preceding claims, **characterized in that** the method further comprises:
- introducing at least one supply channel (91) and at least one discharge channel (92) for the cooling channel system into the component (100) by material-removing machining, wherein the supply channel (91) and the discharge channel (92) are introduced in such a way that the cooling channel system runs continuously from the supply channel (91) to the discharge channel (92).

12. Method according to one of the preceding claims, **characterized in that** the method further comprises:
- additive material-bonding application of different materials with different wear resistance as the build-up material of the component (100).

13. Method according to claim 12, **characterized in that** the build-up material around the cooling channel has a thermal conductivity which is greater than a thermal conductivity of a wear-resistant outer layer (103).

14. Software-supported computer system, **characterized in that** the computer system is configured for design planning of a component (100) to be produced by the method according to one of claims 1 to 13 and for this purpose at least comprises:
- means for defining a component geometry of the component (100) with a cooling channel system, in particular by selecting a geometry of a cooling channel section from a group of predetermined, geometrically predetermined cavities,
- means for determining machining steps which can be carried out in succession by a numerically controlled machine tool and/or a numerically controlled machining centre for producing the component (100) by means of the steps according to one of claims 1 to 13.

15. Software-supported computer system according to claim 14, **characterized in that** the computer system further comprises:
- means for deriving control commands to be used by the numerically controlled machine tool and/or the numerically controlled machining centre for carrying out the machining steps,
- means for transmitting the control commands to the machine tool and/or the machining centre, which are configured for carrying out the machining steps for producing the component (100).

## Revendications

1. Procédé de fabrication d'un composant (100) avec un système de canal de refroidissement, comprenant :
- la construction d'une première section (10) du composant (100) par application additive par liaison de matière d'un matériau de construction,
- l'introduction d'une première cavité (11) avec une ouverture dans la première section (10) du composant (100),
**caractérisé en ce que** le procédé comprend en outre :
- le recouvrement partiel ou complet de l'ouverture de la première cavité (11) dans la première section (10) par une partie de recouvrement (13),
- la construction d'une deuxième section (20) du composant (100) par application additive par liaison de matière du matériau de construction, le matériau de construction étant appliqué au moins sur la partie de recouvrement (13) et éventuellement en outre sur la première section (10),
- l'introduction d'une deuxième cavité (21) dans la deuxième section (20) du composant,
- l'introduction d'un canal de liaison (90 ; 90a) dans le composant (100) au moins partiellement par usinage par enlèvement de matière pour former le système de canal de refroidissement, le canal de liaison reliant la deuxième cavité (21) de la deuxième section (20) à la première cavité (11) de la première section (10) du composant (100).

2. Procédé selon la revendication 1, **caractérisé en ce que** l'introduction de la première (11) et/ou de la deuxième cavité (21) et/ou l'introduction du canal de liaison a lieu à la suite de la construction des sections respectives (10 ; 20) au moins partiellement par usinage par enlèvement de matière.

3. Procédé selon la revendication 2, **caractérisé en ce que** l'usinage par enlèvement de matière pour l'introduction de la première (11) et/ou de la deuxième cavité (21) et/ou du canal de liaison est un usinage par enlèvement de matière.

4. Procédé selon la revendication 1, **caractérisé en ce que** l'introduction de la première (11) et/ou de la deuxième cavité (21) et/ou l'introduction du canal de liaison a lieu au moins partiellement au cours de la construction des sections respectives (10, 20) par omissions lors de l'application additive par liaison de matière du matériau de construction.

5. Procédé selon la revendication 4, **caractérisé en ce que** les surfaces des sections (10 ; 20) adjacentes aux cavités (11 ; 21) introduites au cours de la construction des sections (10 ; 20) sont réusinées par usinage par enlèvement de matière.

6. Procédé selon l'une quelconque des revendications précédentes, **caractérisé en ce que** le procédé comprend en outre les étapes suivantes :
- le recouvrement partiel ou complet d'une ouverture de la deuxième cavité (21) de la deuxième section (20) par une partie de recouvrement (23),
- la construction d'une autre section (30 ; 40) du composant (100) par application additive par liaison de matière du matériau de construction, le matériau de construction étant appliqué au moins sur la partie de recouvrement (23) de l'ouverture de la deuxième cavité (21) et éventuellement également sur la deuxième section (20), et
ZS1 : l'introduction d'autres cavités (31 ; 41) avec une ouverture dans l'une des sections déjà construites auparavant (10 ; 20) du composant (100), l'introduction de l'autre cavité (31 ; 41) ayant lieu à la suite de la construction de la section déjà construite auparavant respective (10 ; 20) par usinage par enlèvement de matière ou au cours de la construction de la section déjà construite auparavant (10 ; 20) par omissions lors de l'application additive par liaison de matière du matériau de construction,
ZS2 : l'introduction d'un ou de plusieurs canaux de liaison (90 ; 90a ; 90b ; 90c) dans le composant (100) par usinage par enlèvement de matière, qui est en particulier un usinage par enlèvement de matière, pour la formation ultérieure du système de canal de refroidissement, le ou les canaux de liaison (90 ; 90a ; 90b ; 90c) reliant l'autre cavité (31; 41) de l'étape ZS1 à une ou plusieurs des cavités introduites auparavant (11 ; 21) dans les sections déjà construites auparavant (10 ; 20) du composant (100),
ZS3 : le recouvrement partiel ou complet de l'ouverture de la ou des autres cavités (31 ; 41) de l'étape ZS1 par une partie de recouvrement (43),
ZS4 : la construction d'une ou de plusieurs autres sections du composant (100) par application additive par liaison de matière du matériau de construction, le matériau de construction étant appliqué sur une ou plusieurs des sections déjà construites auparavant et sur la partie de recouvrement (43) de l'étape précédente ZS3.

7. Procédé selon la revendication 6, **caractérisé en ce que** le procédé comprend en outre :
- plusieurs répétitions de la séquence d'étapes de procédé ZS1 à ZS4 pour la fabrication du composant (100) avec une pluralité de sections (10, 20) et un système de canal de refroidissement réalisé à l'intérieur du composant (100), qui est formé d'une pluralité de cavités (11; 21; 31 ; 41) et d'une pluralité de canaux de liaison (90 ; 90a ; 90b ; 90c ; 90d) pour la liaison de la pluralité de cavités.

8. Procédé selon l'une quelconque des revendications précédentes, **caractérisé en ce que** l'application additive par liaison de matière du matériau de construction a lieu par soudage par application avec un laser ou un arc électrique et l'amenée du matériau de construction a lieu sous forme de poudre et/ou de fil.

9. Procédé selon l'une quelconque des revendications précédentes, **caractérisé en ce que**, dans une région autour de la ou des ouvertures d'une ou de plusieurs des cavités (11 ; 21 ; 31 ; 41) dans les sections respectives, par usinage par enlèvement de matière, des épaulements renfoncés (12 ; 22 ; 42) adaptés aux géométries des parties de recouvrement (13 ; 23 ; 43) réalisées pour le recouvrement des ouvertures respectives, qui sont en particulier des ronds de tôle ou des recouvrements de tôle, sont réalisés de telle sorte que les parties de recouvrement respectives (13 ; 23 ; 43) sont maintenues en position par complémentarité de forme pour le recouvrement des ouvertures respectives.

10. Procédé selon l'une quelconque des revendications précédentes, **caractérisé en ce que** les géométries des cavités (11 ; 21 ; 31 ; 41) sont choisies parmi un ensemble de géométries standard prédéterminées des cavités, qui présentent en particulier des formes généralement cylindriques, et les parties de recouvrement (13 ; 23 ; 43) sont choisies parmi un ensemble de parties de recouvrement préfabriquées adaptées géométriquement aux géométries standard des cavités.

11. Procédé selon l'une quelconque des revendications précédentes, **caractérisé en ce que** le procédé comprend en outre :
- l'introduction d'au moins un canal d'amenée (91) et d'au moins un canal d'évacuation (92) pour le système de canal de refroidissement par usinage par enlèvement de matière dans le composant (100), le canal d'amenée (91) et le canal d'évacuation (92) étant introduits de telle sorte que le système de canal de refroidissement s'étende en continu du canal d'amenée (91) au canal d'évacuation (92).

12. Procédé selon l'une quelconque des revendications précédentes, **caractérisé en ce que** le procédé comprend en outre :
- l'application additive par liaison de matière de différents matériaux avec une résistance à l'usure différente en tant que matériau de construction du composant (100).

13. Procédé selon la revendication 12, **caractérisé en ce que** le matériau de construction présente autour du canal de refroidissement une conductivité thermique qui est supérieure à une conductivité thermique d'une couche extérieure résistante à l'usure (103).

14. Système informatique assisté par logiciel, **caractérisé en ce que** le système informatique est conçu pour la planification de la conception d'un composant (100) à fabriquer par le procédé selon l'une quelconque des revendications 1 à 13 et comprend à cet effet au moins :
- des moyens pour la définition d'une géométrie de composant du composant (100) avec un système de canal de refroidissement, en particulier par la sélection d'une géométrie d'une section de canal de refroidissement parmi un groupe de cavités prédéterminées géométriquement,
- des moyens pour la détermination d'étapes d'usinage réalisées successivement par une machine-outil à commande numérique et/ou un centre d'usinage à commande numérique pour la fabrication du composant (100) au moyen des étapes selon l'une quelconque des revendications 1 à 13.

15. Système informatique assisté par logiciel selon la revendication 14, **caractérisé en ce que** le système informatique comprend en outre :
- des moyens pour la dérivation d'instructions de commande à utiliser par la machine-outil à commande numérique et/ou le centre d'usinage à commande numérique pour la réalisation des étapes d'usinage,
- des moyens pour la transmission des instructions de commande à la machine-outil et/ou au centre d'usinage, qui sont conçus pour la réalisation des étapes d'usinage pour la fabrication du composant (100).
